# EUROPEAN PATENT APPLICATION

(11) **EP 1 022 547 A1**
(43) Date of publication of application: **26.07.2000**
(21) Application number: 00200155.0
(22) Date of filing: 17.01.2000
(51) Int. Cl.: G01F 3/10

(54) **Roatary piston gas meter**

(30) Priority: 19.01.1999 NL 1011078
(71) Applicant: INSTROMET B.V., 7064 KA Silvolde (NL)
(72) Inventor: Richards, Raymond Bernard Johannes, 7064 KA Silvolde (NL)
(74) Representative: Ferguson, Alexander

(57) **Abstract**

Rotary piston gas meter provided with two journalled rotary pistons each having a rotary piston shaft. Furthermore a piston housing is provided, comprising a hollow piston housing body having an internal piston cavity for accommodating the rotary pistons in there. The piston housing body is provided with two opposite passage apertures. The piston cavity has an open drive end and a closing end opposite it. A drive bearing plate and a closing bearing plate are provided, the drive end being closed off by the drive bearing plate attached to the piston housing body and the closing end being closed off by the closing bearing plate. Each of the bearing plates are provided with bearings for the rotary piston shafts. The rotary piston shafts extend through the drive bearing plate and are each provided with a drive gear wheel. The drive gear wheels engage into each other. The drive gear wheel of each of the rotary pistons is situated between the bearings concerned.

## Description

The present invention relates to a rotary piston gas meter provided with:
- two journalled rotary pistons each having a rotary piston shaft,
- a piston housing comprising a hollow piston housing body having an internal piston cavity for accommodating the rotary pistons in there, the piston housing body being provided with two opposite passage apertures, the piston cavity having an open drive end and a closing end opposite it, a drive bearing plate and a closing bearing plate, the drive end being closed off by the drive bearing plate attached to the piston housing body and the closing end being closed off by the closing bearing plate, each of the bearing plates being provided with bearings for the rotary piston shafts, the rotary piston shafts extending through the drive bearing plate and each being provided with a drive gear wheel, the gear wheels engaging into each other.

Rotary piston gas meters are known in many varieties and in practice are for instance used for measuring gas flows, to which end the rotary piston gas meters are placed in a line portion through which the gas flows go. Known rotary piston gas meters consist of a housing of an for instance oval cross-section in which two journalled rotary pistons or rotors are placed such with respect to each other that in cooperation with each other they close off the line portion, in which both rotary pistons can be rotated in opposite direction in such a manner that both pistons always almost remain in contact with on the one hand the wall of the housing and on the other hand with each other. In cooperation with the wall of the housing the pistons during rotation always separate a quantity of gas from the one side of the line portion and subsequently rotate said quantity toward the other side of the line portion. The pistons usually consist of more or less 8-shaped rotors, although other shapes also occur, which by means of external gear wheels, so-called synchronizing wheels, are coupled to each other. Said synchronizing wheels ensure the accurate mutual distance between the rotary piston shafts and are arranged at the ends of the rotary piston shafts near the drive bearing plate. Although such rotary piston gas meters operate satisfactorily in practice, there is a constant need for more accurate and improved rotary piston gas meters.

It is among others an object of the present application to provide a rotary piston gas meter, having a more accurate and improved operation.

To that end a rotary piston gas meter of the type described above according to the invention is characterized in that the drive gear wheel of each of the rotary pistons is situated between the bearings concerned. The invention is based on the insight that in the known rotary piston gas meters, in cases where the synchronizing wheels are arranged outside of the bearings, misalignments between the rotary pistons and the bearings, cause the play between the synchronizing wheels, also as a result of the leverage, to become less definable. The result of this is that the distance between the rotary piston shafts one to the other and between the rotary pistons and the housing has to be increased to prevent jamming of the rotary piston gas meter. The result of this is that the measuring range is reduced. Furthermore the measuring range depends on the braking moment exerted by the bearings, in other words, depends on the size of the bearings. The result of this is that in known rotary piston gas meters the rotary piston shaft has a small diameter because of the bearing, resulting in torsion and bending of the rotary pistons and the rotary piston shafts being able to influence the set synchronization. Too large a torsion or bending may result in the rotary pistons contacting each other or the housing, as a result of which the rotary piston gas meter is jammed. The rotary piston movement will also be obstructed at little pollution, because of which, as a result of torsion, the axle journals may more easily get damaged. In the known rotary piston gas meters moreover, the problem occurs that after replacement or repair of in particular the bearing in the drive bearing plate, the original synchronization is seldom retrieved. This usually results in a complete replacement of the rotary piston gas meter. Because according to the invention the drive gear wheel of each of the rotary pistons is situated between the bearings concerned it will be clear that at the location of the synchronizing wheels the rotary piston shaft may be of maximal thickness, so that the influence of torsion and bending is strongly reduced. The bearing at the end of the rotary piston shaft on the contrary may be designed smaller than the known bearings, so that the braking couple becomes smaller, which in its turn increases the measuring range. Furthermore errors in aligning at the location of the synchronizing wheels have no, or, in comparison to the known rotary piston gas meters, at least a smaller detrimental influence on the operation of the rotary piston gas meter, as the leverage is lacking. Moreover, replacement of or repairing a bearing is possible without the synchronization between the rotary pistons being disturbed.

A preferred embodiment of a rotary piston gas meter according to the present invention is characterized in that the drive bearing plate consists of an outer plate member and an inner plate member, the inner plate member being situated between the outer plate member and the closing bearing plate, the inner plate member being provided with a space for accommodating the drive gear wheels in there, the space being covered by the outer plate member at the side facing away from the closing bearing plate, and in that the bearings are arranged in the outer plate member.

Some embodiments of a rotary piston gas meter according to the present invention will only by way of example be described on the basis of the drawing, in which:
Figure 1 schematically shows a longitudinal section of a known rotary piston gas meter,
Figure 2 schematically shows a cross-section of a known rotary piston gas meter, and
Figure 3 schematically shows a longitudinal section of a rotary piston gas meter according to the present invention.

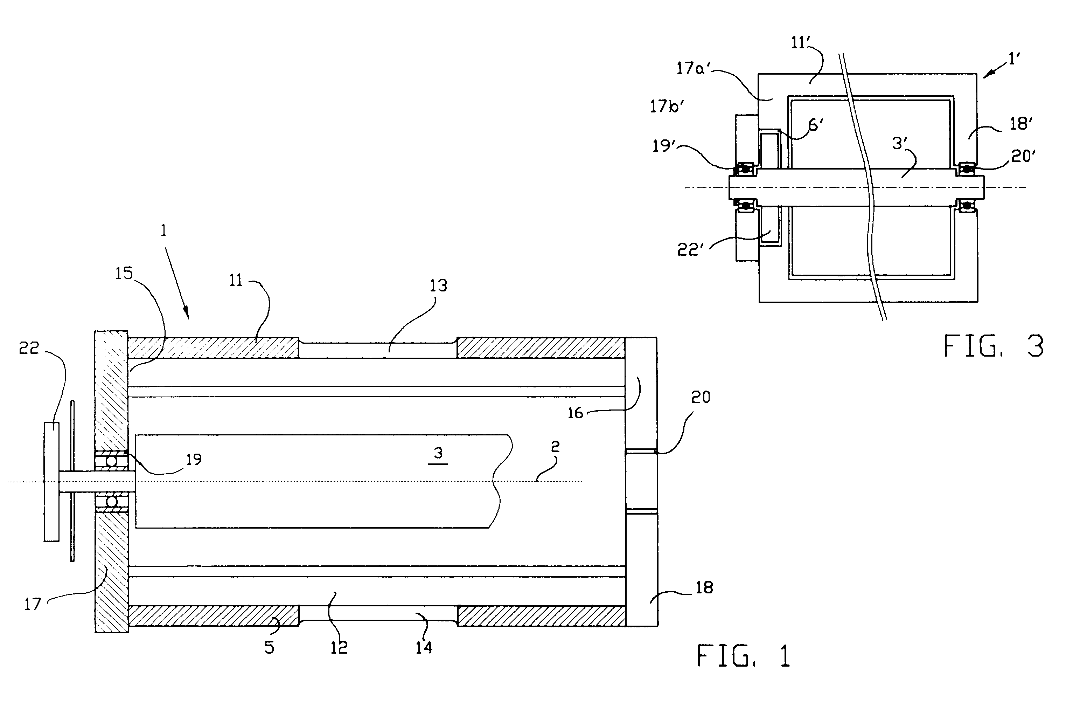

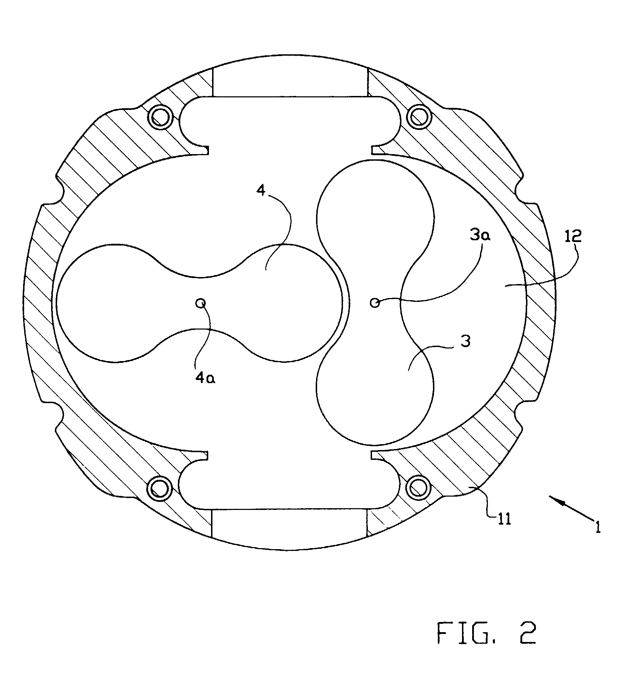

In figure 1 a known rotary piston gas meter 1 is schematically shown in longitudinal section, and in figure 2 in cross-section. In practice said rotary piston gas meter 1 is used for measuring gas flows which flow through a pipe. The rotary piston gas meter 1 has a piston housing 5 in which two journalled rotary pistons 3, 4 or rotors are placed at a defined distance from each other. Here both rotary pistons 3, 4 can be rotated in opposite direction in such a manner that both rotary pistons 3, 4 always almost remain in contact with on the one hand the wall of the piston housing 5 (see figure 2) and on the other hand with each other. In cooperation with the wall of the piston housing 5 the rotary pistons 3, 4 during rotation each time separate a quantity of gas from the one side of the piston housing 5 and subsequently rotate said quantity toward the other side of the piston housing 5. The rotary pistons 3, 4 usually are 8-shaped rotors, although other shapes also occur, which by means of external gear wheels 22, the so-called synchronizing wheels, are coupled to each other.

As can be seen schematically in figure 1, the rotary piston gas meter 1 has a central shaft 2. Furthermore two journalled rotary pistons (of which one 3 can be seen in figure 1, in figure 2 they can be seen both) each having a rotary piston shaft (3a, 4a; see figure 2) are present in the rotary piston gas meter 1. The rotary piston housing 5 comprises a hollow piston housing body 11 having an internal piston cavity 12 for accommodating the rotary pistons 3, 4 in there.

The piston housing body 11 is provided with preferably two opposite passage apertures 13, 14. The piston cavity 12 has an open drive end 15 and opposite it a, for instance also open, closing end 16. A drive bearing plate 17 and for instance a closing bearing plate 18 have also been provided. The drive end 15 is closed off by the drive bearing plate 17 attached to the piston housing body 11. When the closing end 16 is open, it is closed off by the closing bearing plate 18.

Each of the bearing plates 17, 18 is provided with bearings 19, 20 for the rotary pistons. The rotary piston shafts extend through the drive bearing plate 18 and are each provided with a drive gear wheel 22, also called synchronizing wheels, at the side of the drive bearing plate 17 facing away from the rotary piston concerned. The drive gear wheels 22 of the separate rotary pistons engage into each other. Said synchronizing wheels ensure the accurate mutual distance between the rotary piston shafts 3, 4 and are arranged at the end of the rotary piston shafts near the drive bearing plate 17.

A rotary piston gas meter 1' having piston housing body 11' according to the present invention is schematically shown in longitudinal section in figure 3. Contrary to the known rotary piston gas meter the drive gear wheel 22' of each of the rotary pistons 3' is now situated between the bearings 19', 20' concerned, which are arranged in the drive bearing plate 17' and the closing bearing plate 18', respectively.

Preferably the drive bearing plate 17' according to the present invention consists of an outer plate member 17'b and an inner plate member 17'a. The inner plate member 17'a is situated between the outer plate member 17'b and the closing bearing plate 18'. The inner plate member 17'a is provided with a space 6' for accommodating the drive gear wheels 22' in there. The space 6' is covered by the outer plate member 17'b at the side facing away from the closing bearing plate 18'. The bearings 22' are arranged in the outer plate member 17'b.

Because according to the invention the drive gear wheel 22' of each of the rotary pistons 3' is situated between the bearings 19', 20' concerned it will be clear that at the location of the synchronizing wheels 22' the rotary piston shaft can be of maximal thickness, so that the influence of torsion and bending is strongly reduced. The bearing 22' at the end of the rotary piston shaft on the contrary can be designed smaller than the known bearings, so that the braking couple becomes smaller, which in its turn increases the measuring range. Furthermore misalignments at the location of the synchronizing wheels 22' have no or, in comparison to the known rotary piston gas meters, at least a smaller detrimental influence on the operation of the rotary piston gas meter 1', as the leverage is lacking. Moreover replacement of or repairing the bearing 22' is possible without disturbing the synchronization between the rotary pistons 3'.

## Claims

1. Rotary piston gas meter provided with:
- two journalled rotary pistons each having a rotary piston shaft,
- a piston housing comprising a hollow piston housing body having an internal piston cavity for accommodating the rotary pistons in there, the piston housing body being provided with two opposite passage apertures, the piston cavity having an open drive end and a closing end opposite it, a drive bearing plate and a closing bearing plate, the drive end being closed off by the drive bearing plate attached to the piston housing body and the closing end being closed off by the closing bearing plate, each of the bearing plates being provided with bearings for the rotary piston shafts, the rotary piston shafts extending through the drive bearing plate and each being provided with a drive gear wheel, the gear wheels engaging into each other, **characterized in that** the drive gear wheel of each of the rotary pistons is situated between the bearings concerned.

2. Rotary piston gas meter according to claim 1, **characterized in that** the drive bearing plate consists of an outer plate member and an inner plate member, the inner plate member being situated between the outer plate member and the closing bearing plate, the inner plate member being provided with a space for accommodating the drive gear wheels in there, the space being covered by the outer plate member at the side facing away from the closing bearing plate, and in that the bearings are arranged in the outer plate member.
